# EUROPEAN PATENT APPLICATION

(11) **EP 2 990 918 A2**
(43) Date of publication of application: **02.03.2016**
(21) Application number: 14788140.3
(22) Date of filing: 14.04.2014
(51) Int. Cl.: G06F 3/042, G08C 23/04, G02B 27/28

(54) **NON-CONTACT CONTROL METHOD USING A POLARIZING PEN, AND SYSTEM FOR THE IMPLEMENTATION THEREOF**

(30) Priority: 24.04.2013 RU 2013119124
(71) Applicant: Obshestvo S Ogranichennoj Otvetstvennostyu "Laboratoriya Elandis", Syktyvkar 167000 (RU); Gertner, Dmitruy Aleksandrovich, Syktyvkar 167000 (RU)
(72) Inventor: GERTNER, Dmitry Aleksandrovich, g. Syktyvkar 167000 (RU)
(74) Representative: Chimini, Francesco
(86) International application number: PCT/RU2014/000270
(87) International publication number: WO 2014/175779

(57) **Abstract**

This invention includes a method and complex for non-contact control in a form of a polarization marker, a receiving device, and a microprocessor. In the polarization marker, beams are polarized with a customized cylinder polarizer, pass through a system of lenses and reflectors and are emitted into space, wherein the direction of the polarization vectors is axially symmetrical about the virtual axis of the polarization marker. The receiving device located in the working plane identifies the direction and position in space of the polarization marker in relation to the receiver, the results being interpreted by the microprocessor into control commands. The receiving device consists of polarimeters spaced at a predetermined distance. The polarimeters identify the direction of the polarization vectors of incident beams from the polarization marker. Based on the data obtained from each polarimeter, the microprocessor calculates the direction and angles of site of the polarization marker. This complex allows performing the following tasks:
- control the cursor on a monitor screen by pointing the polarization marker at it, wherein the receiver is installed on the monitor body and connected to a computer,
- use it as a part of a remote control for intuitive and user-friendly content management in home theater systems or TV sets to which a receiver is connected,
- in robotics, use it for precise navigation of a robot in a room by installing receivers on the walls/ceilings and by installing a polarization marker on the robot body, with a wireless connection of the receivers to the robot,
- 3D positioning by recognizing the polarization marker position in space in relation to the receiver connected to a computer for use in computer games, simulators, graphics applications, for remote control of manipulators and devices.

Generally, a polarization marker can be made by using an infrared semiconductor light diode, the cylinder polarizer can be made using a fluoroplastic substrate onto which rulings of the required pattern are applied by a photolithography method. Polarimeters can be made using non-cooled grating bolometers.

## Description

The invention relates to the electro-optical industry, more specifically to the method and device for non-contact data control and input.

In fact, there are various methods and devices for remote data input in a form of so called presenters or markers. They are applied to implement an alternative method of data input into the PC through habitual arm movements. There is also a technology of video-based gesture recognition for non-contact control of software.

The downside of those presenters and markers for non-contact data control and input is their low positioning accuracy and large size of the devices themselves. The downsides of the technology of video-based gesture recognition are a low positioning accuracy and a low response rate due to complexity of video data processing.

The invention called "Method of non-contact control using a laser marker and a laser marker system for its implementation" (Russian application number 2012102208) serves as a prototype. This prototype for non-contact data control and input consists of a laser marker and a receiver by which it is possible to identify the spatial position of the laser marker relative to the receiver; then this position gets interpreted into control commands, in particular in order to control the cursor on the monitor screen on which the receiver connected to the PC is installed. It is also possible to perform 3D positioning based on detection of the laser marker's spatial position relative to the receiver for the purpose of its use in computer games, simulators, graphic application, remote control of manipulators and devices, etc.

The downside of this prototype in the first version is an expensive receiver consisting of scores of photodetectors in a form of a frame fixed around the perimeter of the screen.

The downside of this prototype in the second version is a complicated mechanism of transformation of a laser beam into a plane with its further rotation. The use of mechanical components reduces the reliability of the device and increases the power consumption.

The object of the invention is creation of a fundamentally new device consisting of a polarization marker and a receiver that is based on other optical processes, which allows making the device cheaper and more reliable due to elimination of mechanical components.

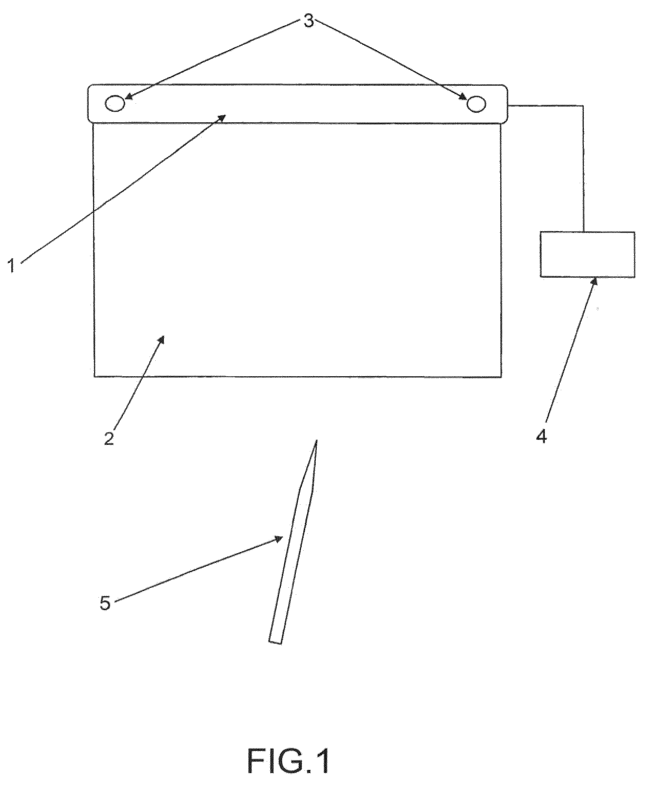

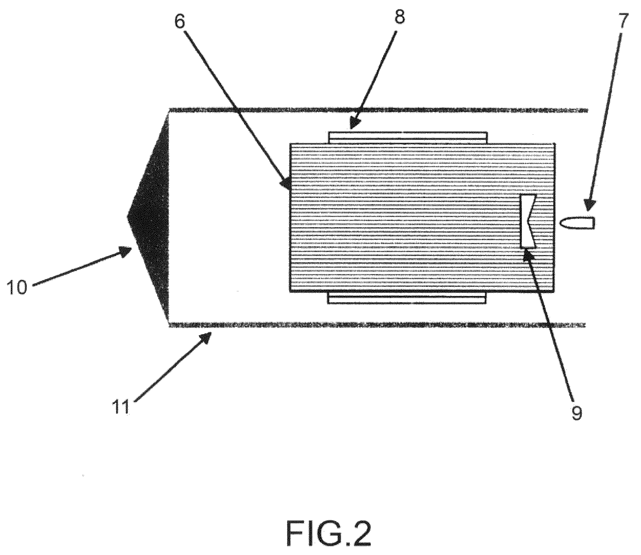

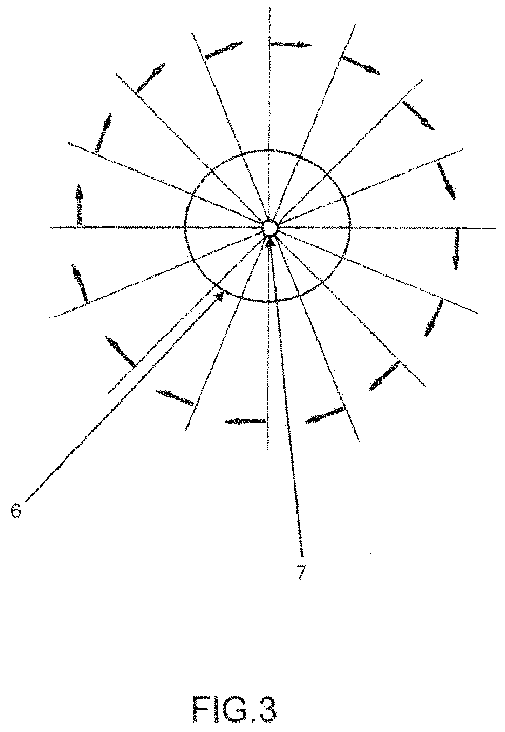

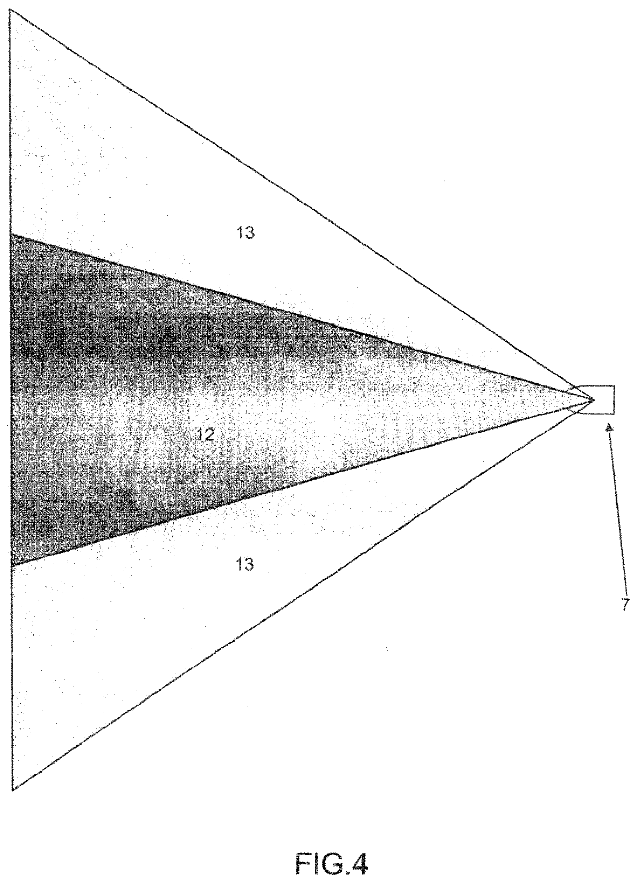

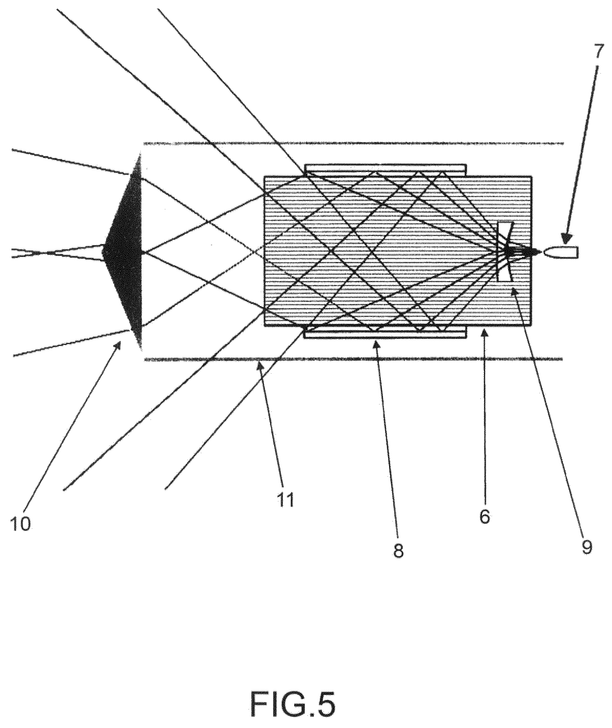

This object is achieved by that polarimeters 3 connected to microprocessor 4 that processes signals coming from polarimeters, are installed on receiver 1 (see Fig. 1) located in working plane 2 of a computer monitor or a TV-set, or a projection screen, or any other device. The signals are formed by light pulses coming from polarization marker 5. The polarization marker itself consists of hollow cylinder polarizer 6 (Fig. 2), light source 7 emitting in the infrared spectrum, reflector 8, lenses 9 and 10, and transparent casing 11. Hollow cylinder polarizer 6 is made of a polymer polarizing film. Such a film can be fabricated by applying a grating, which is a variation of diffraction grating, on it. In particular, this grating is a series of triangular rulings. Aluminum coating is deposited by spraying on one edge of each ruling. Such grating on a polymer film with hundreds or thousands of rulings per millimeter has a polarizing effect on the infrared spectrum. Besides, this film can be bent while still maintaining its polarizing properties. In the polarization marker the film is rolled as a cylinder into hollow tubular polarizer 6. When illuminated from the inside by light source 7, part of the beams passes through the walls of cylindrical hollow polarizer 6 and such beams become polarized, wherein the direction of polarization vectors of radially emitted beams is axially symmetrical about the virtual axis of polarization marker 5. The grating rulings can be arranged along the cylinder axis or across it, around the cylinder. Depending on the direction of rulings on the cylinder, direction of the polarization vectors is axially symmetrical in a circle about the virtual axis of the polarization marker (Fig. 3) or polarization vectors lie in the planes intersecting along this axis. For the polarized beams to be emitted not only sideways in relation to the polarization marker but also at the front of it covering the maximum area, the invention uses an array of lenses and reflectors. To that end, beams emitted by light source 7 (Fig. 4) are nominally split into two segments: central segment 12 located along the virtual axis of the cylinder polarizer under the aperture slope of about 30 degrees, and side segment 13. Light source 7 (Fig. 5) is located at the rear of hollow cylinder polarizer 6. The light emitted by source 7 is directed on conical concave lens 9. The beam bundle of the central segment is converted into a Bessel bundle, and the aperture slope for both segments is increased. Refracted beams are directed on the walls of polarizer 6 on which cylindrical reflector 8 with a mirror-like inner surface is put. Consequently, beams passing through the polarizer fall on reflector 8 and are reflected in the direction of the front end of the polarization marker with negative lens 10 installed on it. The beams of the central segment fall on lens 10. This lens 10 is made in a form of a conical convex lens. It refracts beams in such a way so that the extreme beams intersect the virtual axis of cylinder polarizer 6, whereas the beams of the side segment are passed outside through transparent casing 11.

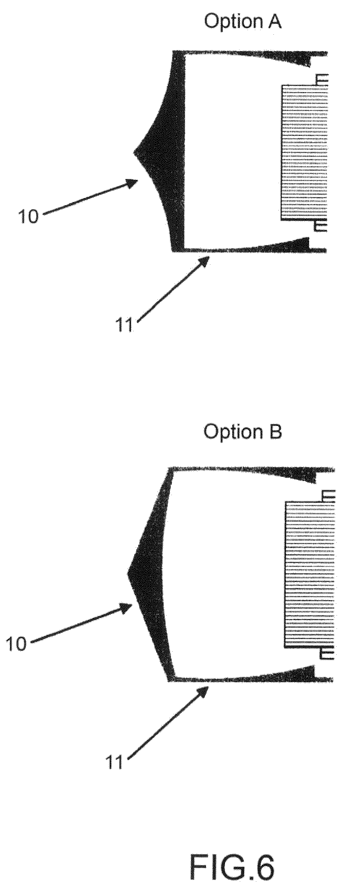

In order to increase the aperture slope of the emitted beams of both sectors and to reduce 'blind zones' between the adjacent beams of emitted beam bundles 12 and 13, transparent casing 11 (Fig. 6) is made cross-flexed and lens 10 is made in a form of a flat-convex lens with a concave conical face (option A). The opposite face of lens 10 can also be made concave, wherein negative lens 10 is made in a form of a conical concave-convex lens (option B).

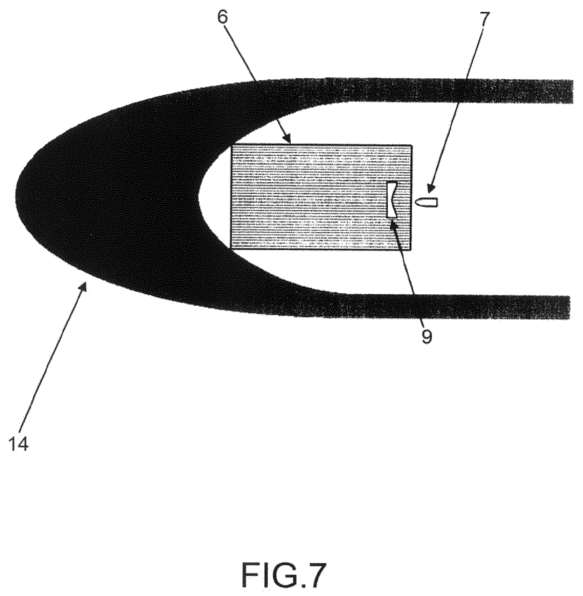

In another option, beams that passed through cylinder polarizer 6 are then refracted by elongated negative conical torpedo-like lens 14 (Fig. 7), installed above cylinder polarizer 6. In this case, a cylindrical reflector is not used. To increase the aperture slope of beams coming from concave conical lens 9, the flat face of the lens can be made convex.

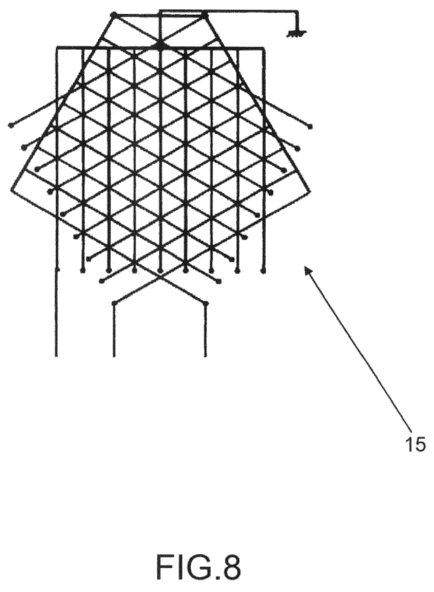

The polarization marker is intended for use as a handling device operated by a user. However, to interpret the motion of the polarization marker into control commands, the direction and position of the polarization marker have to be identified. This task is fulfilled by receiver 1 and microprocessor 4 connected to it. Receiver 1 consists of several polarimeters 3 placed in working plane 2 and spaced at a predetermined distance. If a monitor is used as the working plane, it is practical to place polarimeters around the perimeter of the monitor. The minimum number of polarimeters in the receiver is two. Non-cooled bolometers 15 (Fig. 8) consisting of two, three or four crossed gratings may be used as polarimeters. The grating of each bolometer consists of several parallel metal wires with a diameter of several microns. The wire can be made of nickel or platinum. The emitted light heats up the wires thus changing its electrical resistance. It is known that the direction of an electric vector of a linearly polarized incident wave in relation to the direction of the bolometer wire affects the change in its electrical resistance. Therefore, by measuring the relevant changes in the electrical resistance in all gratings, one can calculate the polarization direction of incident light. The more gratings in the polarimeter, the higher the measuring accuracy. Each bolometer grating is connected to a fast high-sensitivity analog to digital converter, which in its turn is connected to microprocessor 4.

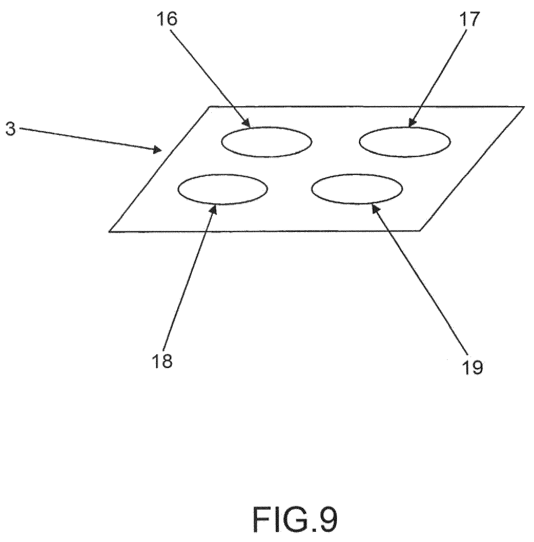

Another type of polarimeters can be made by using a group of linearly polarized analyzers. Each of the said analyzers is a dichroic linear polarizer. The analyzers are placed adjacent to each other, in one plane, with direction of linear polarization of each analyzer turned in relation to others, e.g. azimuth of the first analyzer 16 (Fig. 9) is 0 degrees, azimuth of second analyzer 17 is 45 degrees, azimuth of third analyzer 18 is 90 degrees, and azimuth of fourth analyzer 19 is 135 degrees. A photodetector is placed under each analyzer. Each photodetector is connected to a fast high-sensitivity analog to digital converter that is connected to microprocessor 4.

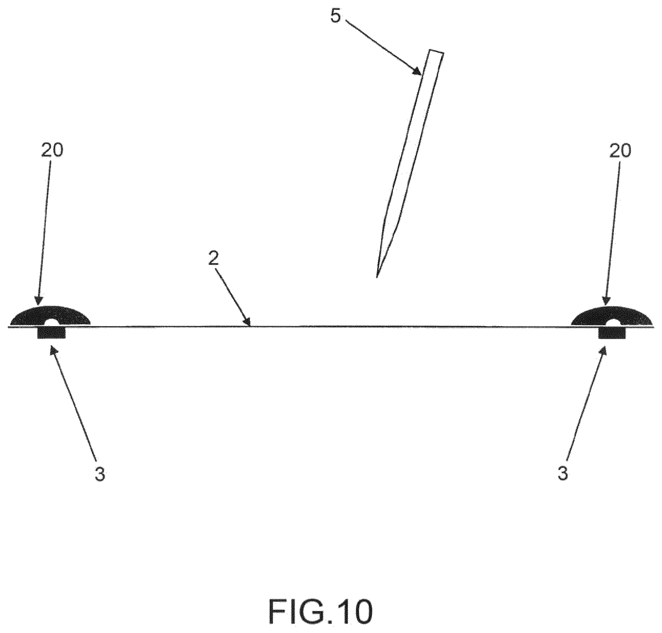

Additionally, light filters can be installed above the polarimeters for transmission of a narrow spectrum of light emitted by light source 7. In order that the polarimeters can receive the light from the polarization marker when it is located near the working plane, meniscus 'fish-eye' lenses 20 are installed above polarimeters 3 (Fig. 10) in particular with a viewing angle of no less than 180 degrees. If polarimeter 3 consists of a set of analyzers, it is more practical to install meniscus lens 20 above each analyzer to eliminate any distortion caused by focusing or spot displacement.

Additionally, at least two high-speed digital cameras, spaced at a certain distance and connected to the microprocessor, can be installed in the receiver. Meniscus 'fish-eye' lenses are also installed above the digital cameras. Apart from meniscus lenses, additional lenses can be used for focusing the light.

A non-contact control method using polarization marker 5 is implemented in the following way. Source of light 7 is switched on inside polarization marker 5 and starts emitting light pulses with a predetermined frequency. Infrared light emitted by light source 7 passes through the walls of a hollow cylinder polarizer and a system of lenses, and reflectors in polarization marker 5 as described above, and the exiting beams are linearly polarized. The directions of the polarization vectors of the beams radially exiting the polarization marker are axially symmetrical about the virtual axis of polarization marker 5. For the polarized beams to cover the area in front of the polarization marker, the beams from light source 7 are passed through hollow cylinder polarizer 6 with part of beams being refracted by negative lens 10.

To control, the user then moves polarization marker 5 in space in front of working plane 2 on which receiver 1 is fixed. There are at least two polarimeters 3 spaced and fixed on sides of receiver 1. Light from polarization marker 5 falls on polarimeters 3. Polarimeters 3 use a known method of differential measurement of the linear polarization. Polarimeters 3 are placed in such a way so that they allow determining the polarization direction along working plane 2. Signals from the polarimeters are sent to the analog to digital converter and then are sent to microprocessor 4 where final processing is performed. Light filters that pass a narrow spectrum of light emitted by light source 7 and the frequency modulation of received signals by the known pulse frequency of light source 7 are used in order to filter out any noise or interference. Polarimeters 3 are used to locate the direction of polarization vectors in working plane 2 and then using microprocessor 4 and the required software, virtual lines are drawn along the direction of vectors; their intersection is used to identify the intersection points of virtual lines in working plane 2 that shows the direction of polarization marker 5. Then, the resulting information is interpreted by microprocessor 4 into control commands.

If it is necessary to identify the angles of slope of polarization marker 5 in relation to working plane 5 for the purpose of control, more polarimeters are installed in the receiver in orthogonal planes, e.g. additional polarimeters are installed normal to the working plane. This will help to identify the angle of slope of the polarization marker in relation to the working plane. However, this method only works if polarization marker 5 is located near working plane 2.

To identify an angle of slope of polarization marker 5 when it is located at a distance from working plane 2, in addition to polarimeters 3, it is proposed to install two high-speed digital cameras on the receiver near the polarimeters and connect the cameras to microprocessor 4 via an analog to digital converter. These cameras are used to identify the space coordinates of light source 7 of the polarization marker by using the phototriangulation method.

Having identified the coordinates of the point in working plane 2, into which polarization marker 5 is pointing, by using polarimeters 3 and having identified the space coordinates of light source 7 of polarization marker 5 by using digital cameras, it is relatively easy to calculate the angles of site of the polarization marker in relation to working plane 2.

Besides, having identified the space coordinates of light source 7 it is possible to find the distance from the polarization marker to the working plane. To increase the viewing angle, digital cameras are placed in particular under meniscus 'fish-eye' lenses with a viewing angle of no less than 180 degrees. In polarization marker 5, an additional light source can be installed, its coordinates being detected by digital cameras, wherein the additional light source can emit light of a different spectrum and can be installed at the rear end of polarization marker 5. In case bolometers 15 are used as polarimeters, each digital camera 21 can be positioned under bolometer 15 and common meniscus lens 20.

Generally, a polarization marker can be made by using an infrared semiconductor light diode, the hollow polarization cylinder can be made using a fluoroplastic substrate onto which rulings of the required pattern are applied by a photolithography method. For refraction and reflection of infrared beams, known materials for the infrared optics are used, e.g. zinc selenide, etc. Optronics of the receiver is made on the basis of either semiconductor photodiodes and CCD matrices or using non-cooled grating bolometers, the grating of which can be made of micron-scale nickel wire. A microprocessor and an analog to digital converter are made of existing hardware components that can be connected to a PC, for example, via USB. The polarization marker can be powered by standard batteries or rechargeable batteries.

## Claims

1. A method for non-contact control using a polarization marker wherein the control is performed using a polarization marker consisting of a hollow cylinder polarizer, a source of light the beams of which pass through the cylinder polarizer walls, reflectors and lenses, wherein the polarization marker is designed so that the direction of polarization vectors of beams radially emitted by the polarization marker is axially symmetrical about the virtual axis of the polarization marker, and at the end of the receiver consisting of several polarimeters spaced at a predetermined distance, the polarized light coming from the polarization marker is received, the polarimeters are used to identify the direction of polarization vectors, and then, based on the obtained data, a microprocessor is used to calculate the direction and the position in space of the polarization marker in relation to the receiver, the result being interpreted into control commands.

2. The method of claim 1 **characterized in that** the beams from the light source are emitted from inside a hollow cylinder polarizer, wherein a part of exiting beams are refracted by a negative lens so as to cover the area in front of the polarization marker.

3. The method of claim 1 **characterized in that** the polarimeters in the receiver are installed in a working plane, are used to identify the direction of polarization vectors in this plane and then the intersection of two virtual lines drawn along the obtained direction of polarization vectors is used to identify the coordinates of the intersection point of these virtual lines that determines the direction of the polarization marker.

4. The method of claim 1 **characterized in that** the polarimeters on the receiver end are placed in different orthogonal planes, and the direction of polarization vectors is identified in these planes.

5. The method of claim 1 **characterized in that** the light source is emitting pulses with a predetermined frequency that is used by the receiver to filter out any noise.

6. The method of claim 1 **characterized in that** at the receiver end there are at least two additional digital cameras installed and connected to the microprocessor. These cameras are used to identify the coordinates of the light source in the polarization marker using the phototriangulation method, and then by correlating them with the coordinates of a point in the working plane at which the polarization marker is pointed, the angle of site of the polarization marker in relation to the working plane is calculated.

7. A complex for non-contact control including:
a polarization marker consisting of a hollow cylinder polarizer, a light source the beams of which pass through the walls of the cylinder polarizer, reflectors and lenses arranged to emit the polarized beams to cover the maximum area in front of and around the polarization marker,
a receiver consisting of several polarimeters spaced at a predetermined distance so as to identify the direction of polarization vectors of beams from the polarization marker,
and a microprocessor connected to the receiver polarimeters.

8. A complex for non-contact control of claim 7 **characterized in that** an infrared light diode is used as a light source in the polarization marker.

9. A complex for non-contact control of claim 7 **characterized in that** in the polarization marker, a film grating polarizer rolled into a cylinder is used as the hollow cylinder polarizer.

10. A complex for non-contact control of claim 7 **characterized in that** in the polarization marker, the light source is located in the rear end of the hollow cylinder polarizer with a concave conical lens placed in front of the light source, while a reflector made in a form of a cylinder with a mirror-like inner surface is put on the hollow cylinder polarizer, and a negative lens is placed at the front end of the hollow cylinder polarizer.

11. A complex for non-contact control of claim 10 **characterized in that** the negative lens at the front end of the hollow cylinder polarizer is made in a form of a flat-convex lens with a concave conical face.

12. A complex for non-contact control of claim 10 **characterized in that** the negative lens at the front end of the hollow cylinder polarizer is made in a form of a conical concave-convex lens.

13. A complex for non-contact control of claim 7 **characterized in that** there is an elongated conical torpedo-like negative lens put on of the hollow cylinder polarizer.

14. A complex for non-contact control of claim 7 **characterized in that** non-cooled bolometers with crossed receiving gratings are used as the polarimeters in the receiver.

15. A complex for non-contact control of claim 7 **characterized in that** a group of linearly polarized analyzers, located in one plane with their directions of polarization light transmission turned at a predetermined angle in relation to each other, are used as the polarimeters in the receiver, with a photodetector installed under each analyzer.

16. A complex for non-contact control of claim 7 **characterized in that** meniscus 'fish-eye' lenses are installed above polarimeters in the receiver.

17. A complex for non-contact control of claim 7 **characterized in that** additionally at least two high-speed digital cameras are installed in the receiver, spaced at a predetermined distance and connected to the microprocessor.

18. A complex for non-contact control of claim 17 **characterized in that** meniscus 'fish-eye' lenses are installed above digital cameras in the receiver.
